# EUROPÄISCHE PATENTSCHRIFT

(11) **EP 4 198 366 B1**
(45) Veröffentlichungstag und Bekanntmachung des Hinweises auf die Patenterteilung: **25.06.2025**
(21) Anmeldenummer: 22213670.7
(22) Anmeldetag: 15.12.2022
(51) Int. Cl.: F16L 21/03

(54) **ROHRVERBINDUNGSTEIL ZUM VERBINDEN DER SPITZENDEN ZWEIER ROHRE**
PIPE JOINT PART FOR CONNECTING TIP ENDS OF TWO PIPES
RACCORD DE TUYAUX POUR RACCORDER LES EXTRÉMITÉS DE DEUX TUYAUX

(30) Priorität: 17.12.2021 DE 202021106891 U
(43) Veröffentlichungstag der Anmeldung: 21.06.2023
(73) Patentinhaber: LWM Werkzeug- und Maschinenbau GmbH, 49377 Vechta (DE)
(72) Erfinder: Lamping, Alwin, 49377 Vechta (DE)
(74) Vertreter: Jabbusch, Matthias

(56) Entgegenhaltungen:
- EP-A1- 2 085 673
- DE-A1- 1 937 176
- DE-A1- 19 718 282
- IT-A1- MI20 090 088
- US-A- 3 796 057

## Beschreibung

Die Erfindung betrifft ein Rohrverbindungsteil zum Verbinden der Spitzenden zweier Rohre, wobei das Rohrverbindungsteil zwei Muffenbereiche aufweist, wobei jeder Muffenbereich zur Aufnahme eines Rohrspitzendes ausgebildet ist und eine Einschuböffnung zum Einschieben der Rohrspitzenden aufweist, wobei zwischen den Muffenbereichen des Rohrverbindungsteils ein entlang der Innenwandung quer zu Längserstreckung des Rohrverbindungsteils umlaufender Ringsteg angeordnet ist.

Rohrverbindungsteile zum Verbinden von Rohren, insbesondere zum Verbinden von Rohren, in denen die Symmetrielängsachsen der beiden Rohre nahezu überein fallen, sind beispielsweise in Form von Doppelmuffen bekannt. Doppelmuffen können beispielsweise im Wesentlichen hohlzylindrisch ausgeführt sein und beidseitige Einschuböffnungen aufweisen, in die die Spitzenden zweier Rohre eingefügt werden können. Der Innendurchmesser der Doppelmuffe ist hierbei an den Außendurchmesser der zu verbindenden Rohre angepasst.

Im Inneren einer Doppelmuffe kann ein sich in radialer Richtung von der Innenwandung der Doppelmuffe erstreckender Ringsteg angeordnet sein. Die beiden Seitenwandungen des Ringsteges können als seitlicher Anschlag für die zu verbindenden Rohre dienen, so dass verhindert ist, dass ein Rohr zu weit in die Doppelmuffe eingeschoben wird und das andere Rohr dementsprechend aus der Doppelmuffe herausschiebt.

Nachteilig kann ein derartiger Ringsteg bei einer seitlichen Belastung der zu verlegenden Rohre sein. Beispielsweise beim Verlegen der Rohre in einer Kurve werden die Rohre an der Innenseite der Kurve aneinandergedrückt, während die Rohrspitzenden an der Außenseite der Kurve auseinander gezogen werden. Hierbei entsteht zwischen dem Ringsteg und den Rohrspitzenden ein Spalt. In dem Spalt können sich beispielsweise Schmutzpartikel oder Ähnliches ansammeln. Zudem kann die Dichtigkeit der Rohrverbindung nicht mehr voll gewährleistet werden. Weiterhin entsteht bei einer seitlichen Belastung eine starke Belastung, wodurch die Muffe beschädigt werden kann.

Aus der DE 19 37 176 A1 ist ein Verbindungsstück für dünnwandige, gewindelose Rohre, bekannt, das im Innern eine oder mehrere ringförmige Rippen aufweist. Durch diese sind, zu den Rohreinführenden hin offenen Ringnuten zur Aufnahme von Dichtringen und gewindelosen Rohrenden ausgebildet.

In der US 3 796 057 A ist ein Pfahlverbinder oder Pfahlkupplung offenbart, mit dem die Enden von zwei Pfählen miteinander verbunden werden, um sie weiter in den Boden zu treiben und um die Enden von zwei Pfählen auszurichten. Ein zweiendiger Spleißer umfasst eine äußere Hülse die zwischen ihren Enden eine nach innen gerichtete Leiste aufweist. Eine innere Halterung jedes Pfahlende wird von der Leiste getragen und ist von der äußeren Hülse beabstandet, um das Ende des Pfahls dazwischen aufzunehmen.

Die DE 197 18 282 A1 zeigt eine Anordnung zur Verbindung zweier Rohre mit einer Muffe, die an beiden Enden doppelwandig ausgebildet ist und eine glatte Innenfläche aufweist. Die Rohrenden werden mit ihren Stirnkanten in die Zwischenräume zwischen der Außenwand und der Innenwand eingeschoben. Diese Verbindung ermöglicht einen Längenausgleich aufgrund von Temperaturschwankungen und vermeidet störende Ringräume an der Innenseite der Verbindungsstelle.

Die EP 2 085 673 A1 bezieht sich auf eine Rohrverbindungsstruktur mit einem Muffenelement, mit einer Endkante, die zur Aufnahme eines Spitzendes eines Rohres geeignet ist, wobei das Muffenelement eine Wand aufweist, in der eine umlaufende Dichtungsringnut vorgesehen ist. In der Dichtungsringnut ist ein Dichtungsring angeordnet der, wenn das Spitzende in dem Muffenelement aufgenommen wurde, in einem komprimierten Dichtungszustand ist, um die Verbindung zwischen dem Muffenelement und dem Spitzende abzudichten.

Der Erfindung liegt die Aufgabe zugrunde, ein Rohrverbindungsteil zum Verbinden zweier Rohre vorzuschlagen, bei dem auch bei seitlicher Belastung kein offener Spalt zwischen den Rohren entsteht und eine hohe Belastbarkeit beim Verlegen von Bögen gegeben ist.

Die Lösung dieser Aufgabe erfolgt mit einem Rohrverbindungsteil mit den Merkmalen des Schutzanspruchs 1. Weiterbildungen und vorteilhafte Ausgestaltungen sind in den Unteransprüchen angegeben.

Bei einem Rohrverbindungsteil zum Verbinden der Spitzenden zweier Rohre, wobei das Rohrverbindungsteil zwei Muffenbereiche aufweist, wobei jeder Muffenbereich zur Aufnahme eines Rohrspitzendes ausgebildet ist und eine Einschuböffnung zum Einschieben der Rohrspitzenden aufweist, wobei zwischen den Muffenbereichen des Rohrverbindungsteils ein entlang der Innenwandung quer zu Längserstreckung des Rohrverbindungsteils umlaufender Ringsteg angeordnet ist, wobei der umlaufende Ringsteg sich beidseitig in Richtung der Einschuböffnungen erstreckende Innenmanschette aufweist, wobei zwischen der Innenmanschette, den Seitenwandungen des Ringsteges und Abschnitten der Innenwandung des Rohrverbindungsteils zu beiden Seiten des Ringsteges jeweils ein umlaufender Aufnahmeraum zur zumindest abschnittsweisen Aufnahme der jeweiligen Rohrspitzenden ausgebildet ist, wobei die Muffenbereiche jeweils mindestens eine umlaufende Ringsicke zur Aufnahme mindestens einer Ringdichtung aufweisen, wobei die Außenseiten der Ringsicke, insbesondere die Außenseite des Sickenbodens, zumindest abschnittsweise eine umlaufende Rippe an der Außenseite des Rohrverbindungsteils ausbilden, ist erfindungswesentlich vorgesehen, dass die durch die Außenseiten der Ringsicke ausgebildete Rippe einen kleineren Außendurchmesser als die benachbarte weiter in Richtung der Einschuböffnung angeordneten Rippe aufweist und dass die durch die Außenseiten der Ringsicke ausgebildete Rippe einen größeren Außendurchmesser als die benachbarte weiter in Richtung der Mitte des Rohrverbindungsteils angeordneten Verstärkungsrippe aufweist.

Das Rohrverbindungsteil zum Verbinden der Spitzenden zweier Rohre ist in Form einer Doppelmuffe, also zur beidseitigen Aufnahme von Rohrenden ausgebildet. Das Rohrverbindungsteil weist einen im Wesentlichen hohlzylindrischen Innenraum auf, in den von beiden Seiten die Spitzenden der Rohre eingefügt werden können. Insbesondere ist das Rohrverbindungsteil so ausgebildet, dass zwei Rohre so verbunden werden können, dass ihre Symmetrielängsachsen im Wesentlichen übereinstimmen. Das Rohrverbindungsteil weist zwei Muffenbereiche auf, die sich beidseitig von einem Mittelteil ausgehend erstrecken und jeweils eine Einschuböffnung aufweisen, durch die zu verbindenden Rohre von beiden Seiten eingeschoben werden können. Die Einschuböffnungen der beiden nebeneinander angeordneten Muffenbereiche sind vorzugsweise radialsymmetrisch ausgebildet und die Symmetriemittelachsen der beiden Einschuböffnungen fallen im Wesentlichen überein. An der Innenwandung des Rohrverbindungsteils ist ein Ringsteg angeordnet, der sich von der Innenwandung ausgehend radial in Richtung des Innenraumes des Rohrverbindungsteils erstreckt. Der Ringsteg weist somit vorzugsweise die Form eines Kreisringes auf. Das Rohrverbindungsteil kann spiegelsymmetrisch und rotationsymmetrisch ausgebildet sein. Der Ringsteg ist im Bereich der Symmetriemittelachse, die senkrecht zur Längserstreckung des Rohrverbindungsteils verläuft, angeordnet. Die Seitenflächen des Ringsteges sind jeweils einer Einschuböffnung zugewandt und sind im Wesentlichen parallel zu der von dem Radius der Innenwandung des Rohrverbindungsteils aufgespannten Ebene angeordnet. Der Innenradius des Ringsteges ist rotationssymmetrisch um die Zylinderachse, um die der Innenraum des Rohrverbindungsteils rotationssymmetrisch ausgebildet ist, zugewandt angeordnet. Die Zylinderachse entspricht bei dem Rohrverbindungsteil der Längsachse. Am Innenradius des Ringsteges ist eine sich beidseitig jeweils in Richtung der Einschuböffnungen erstreckende Innenmanschette angeordnet. Die Manschette ist somit quer zu der von dem Ringsteg aufgespannten Ringebene angeordnet. Die Manschette ist also in Form eines Gurtes, wie bei einem T-Träger, an dem Steg angeordnet. Die Innenmanschette bildet somit einen Überstand aus, der zu beiden Seiten, also jeweils in Richtung der Einschuböffnungen über die Seitenwandungen des Ringsteges übersteht. Vorzugsweise ist die Breite der Innenmanschette, also die Abmessung der Innenmanschette in Längserstreckung des Rohrverbindungsteils, in etwa ein Sechstel des Durchmessers der zu verbindenden Rohre. Zwischen Abschnitten der Innenwandung des Rohrverbindungsteils, der Innenmanschette und den Seitenwandungen des Ringsteges ist jeweils ein entlang des Ringsteges umlaufender Aufnahmeraum zur Aufnahme der Rohrspitzenden der zu verbindenden Rohre ausgebildet. Die Aufnahmeräume sind jeweils in Richtung der Einschuböffnungen offen, so dass die Rohrspitzenden eingeschoben werden können. Wenn nun die Rohrspitzenden der beiden zu verbindende Rohre von beiden Seiten in das Rohrverbindungsteil eingeschoben werden und jeweils in Anlage zu der jeweiligen Seitenwandung des Ringsteges gebracht werden, oder zumindest an diesen angenähert werden, ist der Spalt zwischen den Rohrspitzenden und dem Ringsteg durch die Innenmanschette verdeckt bzw. überbrückt. Der Innendurchmesser der Manschette kann hierbei dem Innendurchmesser der zu fügenden Rohre entsprechen. Die Spitzenden der zu fügenden Rohre können hierbei entsprechend verjüngt ausgebildet sein. Durch das Einfügen der Spitzenden der zu verbindenden Rohre in die Aufnahmeräume ist es verhindert, dass sich ein Spalt zwischen dem Ringsteg und den Rohrspitzenden ausbildet. Weiterhin ist es bei Kurvenverlegung verhindert, dass an der Kurvenaußenseite, an der die Rohrspitzenden auseinandergezogen werden, ein Spalt zwischen den Rohrspitzenden und dem Ringsteg entsteht, da die Hohlräume zwischen den Rohrspitzenden und den Seitenwandungen des Ringsteges durch die Innenmanschette abgedeckt sind. Zudem ergibt sich aus der Anordnung der Innenmanschette eine verbesserte Stabilität des Rohrverbindungsteils bei Kurvenverlegungen. Auch die Entstehung von offenen Spalten bei Temperaturschwankungen, ist durch die Anordnung der Innenmanschette verhindert. Vorzugsweise ist das Rohrverbindungsteil einstückig aus einem Kunststoff gefertigt.

Die Muffenbereiche weisen jeweils eine umlaufende Ringsicke zur Aufnahme mindestens einer Ringdichtung auf. Die Muffenbereiche weisen jeweils mindestens eine Ringsicke auf, in die jeweils eine Ringdichtung eingesetzt sein kann. Eine in die Ringsicke aufgenommene Dichtung ist insbesondere zum Abdichten der Verbindung zwischen den Rohren vorgesehen. Die Ringsicken können jeweils im Anschluss an den jeweiligen Muffenhals angeordnet sein. Eine Ringsicke ist hierbei insbesondere als Vertiefung in der Innenwandung des Rohrverbindungsteils ausgebildet. Die von einer Ringsicke aufgespannte imaginäre Ebene ist parallel zu einer vom Durchmesser des Rohrverbindungsteils aufgespannten Ebene angeordnet. Die Ringsicken sind somit quer zur Längserstreckung, also zur Zylinderachse des Rohrverbindungsteils, angeordnet.

Die Außenseiten der Ringsicke, insbesondere die Außenseite des Sickenbodens, bilden zumindest abschnittsweise eine umlaufende Rippe an der Außenseite des Rohrverbindungsteils aus. Die Ringsicken zum Aufnehmen der Ringdichtungen sind im Wesentlichen nutartig ausgebildet. Der Nutboden oder auch der Sickenboden weist eine Außenwandung auf, die eine umlaufende Rippe an der Außenseite des Rohrverbindungsteils ausbildet. Die Rippe ist hierbei parallel zu den an der Außenseite ausgebildeten Verstärkungsrippen angeordnet. Die durch den Sickenboden ausgebildete Rippe kann breiter ausgebildet sein als die Verstärkungsrippen. Durch die Ausbildung einer Rippe durch den Sickenboden ist eine Formflexibilität der Ringsicke gegeben. Insbesondere bei der Kurvenverlegung von mit dem Rohrverbindungsteil verbundenen Rohren können somit die entstehenden Kräfte durch Stauchung an der Kurveninnenseite sowie durch gleichzeitiges Strecken an der Kurvenaußenseite aufgenommen werden, so dass es nicht zum Bruch des Rohrverbindungsteils kommt.

Die durch die Außenseite der Ringsicke ausgebildete Rippe weist einen kleineren Außendurchmesser als die benachbarte weiter in Richtung der Aufnahmeöffnung angeordnete Verstärkungsrippe auf und die durch die Außenseite der Ringsicke ausgebildete Rippe weist einen größeren Außendurchmesser als die benachbarte weiter in Richtung der Mitte des Rohrverbindungsteils angeordnete Verstärkungsrippe auf. Die durch die Ringsicken ausgebildeten Rippen an der Außenseite des Rohrverbindungsteils fügen sich also mit ihren Außendurchmessern in die Außendurchmesser der Verstärkungsrippen ein, die von außen nach innen kleiner werden. Hierdurch ist eine günstige Kraftverteilung insbesondere beim Kurvenverlegen ermöglicht.

In einer Weiterbildung der Erfindung ist die sich beidseitig erstreckende Innenmanschette entlang des Innenradius des Ringsteges umlaufend angeordnet und durch die an dem Ringsteg angeordnete Innenmanschette ist beidseitig zum Ringsteg jeweils eine umlaufende Hinterschneidung ausgebildet. Die Innenmanschette ist in Form eines Überstandes entlang des Innenradius des Ringsteges umlaufend angeordnet. Hierdurch ist ein Fügen der zu verbindenden Rohre ermöglicht, wobei die Innenwandungen der zu verbindenden Rohre und der Manschette möglichst ohne Absatz, Vorsprünge oder Ähnliches zueinander angeordnet sind, so dass eine möglichst plane Innenmantelfläche entsteht.

In einer Ausführung der Erfindung entspricht der Innendurchmesser der Innenmanschette dem Innendurchmesser der zu verbindenden Rohre. Die zu verbindenden Rohre können an ihren Spitzenden beidseitig angefast sein bzw. eine Verjüngung aufweisen. Die verjüngten Bereiche können zwischen der Manschette und der Innenwandung des Rohrverbindungsteils aufgenommen werden, während die Vorderkanten der Rohre in Anlage zu den Seitenwandungen des Ringsteges gebracht werden können. Insbesondere können die Rohrspitzenden mit ihren Verjüngungen an die Aufnahmeräume zwischen der Innenmanschette und der Innenwandung des Rohrverbindungsteils angepasst sein, so dass bei Fügung zweier Rohre eine möglichst plane Innenmantelfläche zwischen den Rohren und der Manschette entsteht, bei der die Innenwandung der Rohre in die Innenseite der Manschette übergeht. Der Innendurchmesser der Innenmanschette entspricht also dem Nenninnendurchmesser der zu verbindenden Rohre.

In einer Weiterbildung der Erfindung ist die Innenmanschette an den den Einschuböffnungen zugewandten Kanten jeweils angeschrägt, wobei die Anschrägung an der der Innenwandung des Rohrverbindungsteils abgewandten Seite des Überstandes ausgebildet ist und wobei die Materialstärke der Innenmanschette zumindest abschnittsweise zu den Außenkanten der Innenmanschette hin abnimmt. Die Innenmanschette, also der beidseitige Überstand der am Ringsteg angeordnet ist, weist an ihrer der Innenwandung des Rohrverbindungsteils abgewandten Seite, also an der dem Innenraum, also der Längsachse zugewandten Seite, eine Anschrägung auf. Insbesondere ist die Materialstärke, also die Dicke der Innenmanschette an der den jeweils den Einschuböffnungen zugewandten Außenkanten, geringer als in dem Bereich am Ringsteg. Vom Ringsteg ausgehend nimmt die Materialstärke der Innenmanschette zu ihren Außenkanten hin also ab, wobei eine Anschrägung in Richtung der Innenwandung des Rohrverbindungsteils ausgebildet ist. Hierdurch ist eine verbesserte Fügbarkeit der zu verbindenden Rohre und eine verbesserte Ausbildung einer Innenmantelfläche zwischen den Rohren und der Innenmanschette mit einer möglichst geraden Mantellinie gegeben.

In einer Weiterbildung der Erfindung geht die Anschrägung an den Außenkannten der Innenmanschette jeweils in eine Rundung über. Die jeweils an den äußeren Bereichen angeschrägte Innenmanschette geht an ihren Außenkanten in eine Rundung über, so dass die Außenkanten, die den Einschuböffnungen zugewandt sind, einen Radius ausbilden. Somit ist ein vereinfachtes Fügen der zu verbindenden Rohrspitzenden ermöglicht.

In einer Weiterbildung der Erfindung ist zwischen den Seitenwänden des Ringsteges und der Innenmanschette mindestens ein Verstärkungselement ausgebildet. Um eine verbesserte Stabilität des als Innenmanschette ausgebildeten sich zu beiden Seiten erstreckenden Überstandes zu ermöglichen, ist zwischen den der Innenwandung des Rohrverbindungsteils zugewandten Seiten der Innenmanschette und den Seitenwandungen des Ringsteges ein Verstärkungselement in Form einer Verdickung des Ringsteges ausgebildet. Die Verdickung des Ringsteges kann insbesondere an die Fasen, insbesondere die Innenfasen, der zu fügenden Rohrspitzenden angepasst sein.

In einer Weiterbildung der Erfindung ist das Verstärkungselement zu den Fasen der einzuschiebenden Rohrspitzenden korrespondierend ausgebildet. Vorzugsweise weisen die Rohrspitzenden der zu fügenden Rohre an ihren Außenkanten und Innenkanten jeweils eine Außenfase auf. Die Verstärkungselemente zwischen den Seitenwandungen des Ringsteges und dem jeweils überstehenden Bereich der Innenmanschette kann an die Innenfase der Rohrspitzenden angepasst sein, so dass ein einfaches Fügen der Rohrspitzenden ermöglicht ist.

In einer Weiterbildung der Erfindung entsprechen die Abschnitte der Innenwandung des Rohrverbindungsteils die den Aufnahmeraum begrenzen den Außendurchmessern der aufzunehmenden Rohre. Zu beiden Seiten des Ringsteges ist jeweils ein Aufnahmeraum zur Aufnahme der Spitzenden der zu fügenden Rohre ausgebildet. Der Außendurchmesser eines Aufnahmeraumes, der durch die Innenwandung des Rohrverbindungsteils in diesem Bereich gegeben ist, entspricht dem Außendurchmesser der Spitzenden der zu verbindenden Rohre. Die Rohrspitzenden können in die Aufnahmeräume eingepresst werden. Somit ist ein sicherer Halt der Rohrspitzenden zwischen der Innenseite der Innenmanschette sowie der Außenwandung des Rohrverbindungsteils gegeben. Insbesondere können die Rohrspitzenden innere Verjüngungen aufweisen. Der Innendurchmesser der Aufnahmeräume, der durch die der Innenwandung des Rohrverbindungsteils zugewandten Seite der Innenmanschette ausgebildet ist, kann dem Innendurchmesser der Rohrspitzenden im Bereich der inneren Verjüngungen entsprechen. Der Außendurchmesser der Rohrspitzenden kann dem Innendurchmesser der Innenwandung des Rohrverbindungsteils in diesem Bereich entsprechen.

In einer Weiterbildung der Erfindung ist der Innendurchmesser des Rohverbindungsteils an den Öffnungen der Aufnahmeräume größer als in den zum Ringsteg benachbarten Bereichen der Aufnahmeräume. Die sich zu beiden Seiten des Ringsteges erstreckenden Aufnahmeräume weisen jeweils eine Aufnahmeöffnung auf, die den Einschuböffnungen zugewandt ausgerichtet sind. In einem ersten Bereich, der benachbart zu den Öffnungen der Einschubräume angeordnet ist, also in dem den Außenkanten der Innenmanschette gegenüberliegenden Bereich, weist das Rohrverbindungsteil einen größeren Innendurchmesser auf, als in einem zweiten Bereich des Aufnahmeraumes der direkt benachbart zum Ringsteg angeordnet ist. Durch die Verkleinerung des Innendurchmessers im Verlauf des Aufnahmeraumes von dessen Öffnung in Richtung des Ringsteges ist ein sicheres Verpressen der Rohrspitzenden in den Aufnahmeräumen ermöglicht.

In einer Weiterbildung der Erfindung weist das Rohrverbindungsteil außenliegende Rippen auf, die Rippen erstrecken sich in radialer Richtung von der Außenwandung des Rohrverbindungsteils und die Rippen sind parallel zueinander angeordnet. Das Rohrverbindungsteil weist außenliegende Rippen auf, die insbesondere als Verstärkungsrippen ausgebildet sind. Insbesondere dienen die Rippen der Aussteifung und Verstärkung des Rohrverbindungsteils, bei der Verformung der Muffenbereiche nach dem Fügen der Rohre und anschließenden Abwinklung, bei Kurvenverlegungen der Rohre. Die Rippen erstrecken sich in radialer Richtung an der Außenseite also beispielsweise der äußeren Mantelfläche des Rohrverbindungsteils. Die von den Rippen aufgespannten imaginären Ebenen sind parallel zueinander angeordnet und parallel zu der vom Innendurchmesser des Rohrverbindungsteils aufgespannten Ebene angeordnet. Die Rippen verlaufen somit quer zur Längserstreckung des Rohrverbindungsteils. Die Rippen sind vorzugsweise einteilig mit dem Rohrverbindungsteil, insbesondere aus einem Kunststoff, ausgebildet. Weiterhin können alternativ die Rippen und das Rohrverbindungsteil zweiteilig beziehungsweise mehrteilig ausgebildet sein. Insbesondere können die Rippen an den äußeren Muffenbereichen an einem manschettenartigen Bauteil ausgebildet sein, die um die Muffenbereiche herum angeordnet sein können. Beispielsweise können die Rippen an einem Außenmanschettenteil ausgebildet sein, dessen Innenwandung im Wesentlichen hohlzylindrisch ausgebildet ist. Die Außenbereiche der Muffenbereiche können auch im Wesentlichen zylindrisch ausgeführt sein, so dass die Außenmanschetten mit den Rippen über die Muffenbereiche geschoben, insbesondere verpresst werden. Hierzu können die Muffenbereiche Hinterschneidungen aufweisen, so dass eine sichere Fixierung der Außenmanschetten in Längsrichtung des Rohrverbindungsteils ermöglicht ist. Die rippenaufweisenden Außenmanschetten können hierzu aus einem anderen Material als das Rohrverbindungsteil, beispielsweise aus einem metallischen Material wie Aluminium ausgebildet sein, sie können allerdings auch aus dem gleichen Material wie das Rohrverbindungsteil ausgebildet sein. Die Rippen an den Außenmanschetten erstrecken sich im montierten Zustand ebenfalls in radialer Richtung zu der äußeren Mantelfläche des Rohrverbindungsteils. Durch die Verstärkungsrippen an der Außenseite ist eine erhebliche Steigerung der Stabilität des Rohrverbindungsteils, insbesondere beim Auftreten von Verformungen aufgrund von Kurvenverlegungen der Rohre gegeben.

In einer Weiterbildung der Erfindung weisen die Rippen im Bereich der Außenwandung der Einschuböffnungen einen größeren Außendurchmesser auf, als die Rippen im Mittelbereich des Verbindungsteils. Die äußeren Rippen, also die Rippen im Bereich der Einschuböffnungen, weisen die größten Außendurchmesser auf. Die Außendurchmesser der benachbarten Rippen nehmen jeweils in Richtung der Mitte, also in Richtung der Spiegelsymmetrieachse in der der Ringsteg angeordnet ist, hin ab. Die Rippen mit den größten Außendurchmessern sind im Bereich der Einschuböffnungen angeordnet, die Rippen mit den kleinsten Außendurchmessern sind benachbart zur Mitte, also zum Ringsteg, angeordnet. Mit den Außendurchmessern der Rippen nimmt auch deren Höhe ab. Durch die verschiedenen Außendurchmesser ist eine verbesserte Kraftverteilung beim Einfügen der zu verbindenden Rohre gegeben.

In einer Weiterbildung der Erfindung nehmen die Außendurchmesser der parallel zueinander angeordneten Rippen von den Einschuböffnungen in Richtung der Mitte des Rohrverbindungsteils hin ab. Durch den Verlauf der Außendurchmesser ist eine gute Kraftverteilung der auftretenden Kräfte beim Kurvenverlegen der Rohre sowie beim Einfügen der Rohre in das Rohrverbindungsteil gegeben.

In einer Weiterbildung der Erfindung weisen die Muffenbereiche jeweils einen Muffenhals auf und die Muffenhälse weisen jeweils eine Länge von in etwa ein Drittel des Durchmessers des aufzunehmenden Rohres auf. Als Muffenhals sind die Eingangsbereiche jeweils von der jeweiligen Einschuböffnung ausgehend in Richtung der Mitte des Rohrverbindungsteils bezeichnet. Die Muffenhälse sind im Wesentlichen hohlzylindrisch ausgebildet und weisen eine Innenmantelfläche mit gerader Mantellinie auf. Die Muffenhälse sind insbesondere zur Führung der zu verbindenden Rohre zur Stabilisierung des Rohrverbindungsteils beim Kurvenlegen mit den verbundenen Rohrleitungen ausgebildet. Der Innendurchmesser der Innenwandung der Muffenhälse entspricht in etwa dem Außendurchmesser der zu verbindenden Rohre.

In einer Weiterbildung der Erfindung sind die Innenkanten der Einschuböffnungen abgerundet. Um ein Einschieben der zu verbindenden Rohre in das Rohrverbindungsteil zu vereinfachen, sind die Innenkanten der Einschuböffnungen der Muffenbereiche insbesondere in Richtung des Außendurchmessers des Rohrverbindungsteils abgerundet. Somit ergibt sich an der Einschuböffnung ein vergrößerter Durchmesser, so dass das einzuschiebende Rohr einfacher aufgenommen werden kann und durch die Rundung in den Muffenhals geführt wird. Zudem ist durch eine abgerundete Kante die Kerbwirkung auf das eingeschobene Rohr reduziert.

In einer Weiterbildung der Erfindung weist die Innenmanschette beidseitig vom Ringsteg ausgehend eine Neigung in Richtung der nächstgelegenen Innenwandung des Rohrverbindungsteils auf. Die eine Innenmanschette ausbildenden seitlichen Überstände des Ringsteges sind jeweils leicht in Richtung der nächstliegenden Innenwandung des Rohrverbindungsteils, also der Innenwandung, die auch den jeweiligen Aufnahmeraum begrenzt, geneigt. Hierdurch ist beim Einschieben der Rohrspitzenden ein sicherer Halt gegeben.

In einer Weiterbildung der Erfindung ist die Ringsicke zumindest abschnittsweise flexibel ausgebildet. Durch die Ausbildung einer Rippe an der Außenwandung und die hieraus resultierende relativ geringe Wandstärke der Sicke und des Sickenbodens sind die Ringsicken flexibel ausgebildet, so dass der Sickenboden gestreckt und gestaucht werden kann. Die Wandstärke fällt geringer als in dem Fall aus in dem die Sicke als Vertiefung in einem massiven Bauteil ausfällt.

In einer Weiterbildung der Erfindung entspricht der Abstand in Längserstreckung des Rohrverbindungsteils zwischen der dem Einschubende zugewandten Außenseite der Ringsicke und der Mitte des Ringsteges in etwa einem Drittel des Rohrdurchmessers der aufzunehmenden Rohre. Durch den Abstand zwischen der Ringsicke und dem Ringsteg, also der Symmetrieachse des Rohrverbindungsteils, ist eine sichere Aufnahme des Rohres und eine Kraftverteilung beim Kurvenverlegen der Rohrleitungen gegeben.

In einer Ausführungsform der Erfindung ist das Rohrverbindungsteil spiegelsymmetrisch und/oder rotationssymmetrisch aufgebaut. Vorzugsweise ist das Rohrverbindungsteil spiegelsymmetrisch zur Symmetrieachse, die vorzugsweise mit dem Steg überein fällt, und rotationssymmetrisch um eine Zylinderachse aufgebaut.

Im Folgenden wird die Erfindung anhand eines in der Zeichnung dargestellten Ausführungsbeispiels weiter erläutert. Im Einzelnen zeigen die schematischen Zeichnungen in:
- Fig. 1:: eine geschnittene Ansicht eines erfindungsgemäßen Rohrverbindungsteils;
- Fig. 2:: ein Rohrverbindungsteil gemäß Fig. 1 mit eingefügten Rohren,
- Fig. 3:: ein erfindungsgemäßes Rohrverbindungsteil mit eingefügten Rohren bei einer Kurvenverlegung; und
- Fig. 4:: ein Rohrverbindungsteil mit Rippen aufweisenden Außenmanschetten.

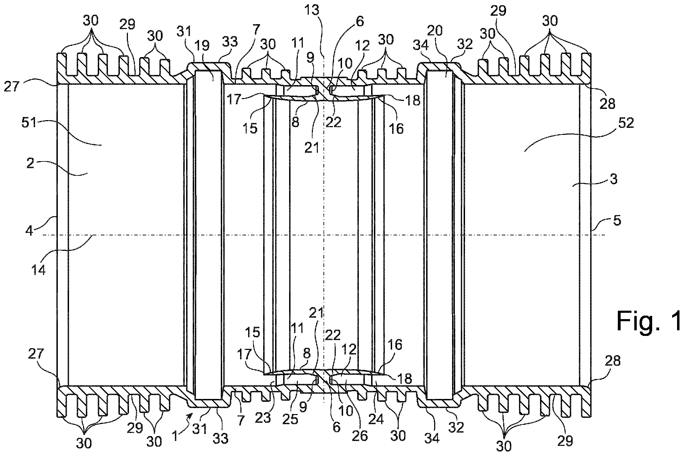

In Fig. 1 ist ein Rohrverbindungsteil 1 mit zwei Muffenbereichen 2, 3 dargestellt. Die Muffenbereiche 2, 3 weisen jeweils Einschuböffnungen 4, 5 zum Einschieben von Rohrspitzenden auf. Zwischen den Muffenbereichen 2, 3 ist ein umlaufender Ringsteg 6 angeordnet, der entlang der Innenwandung 7 des Rohrverbindungsteils 1 verläuft und sich radial von der Innenwandung 7 erstreckt. Der Ringsteg 6 weist an seinem äußeren Radius eine Innenmanschette 8 auf, die in Form von Überständen, die sich in Richtung der Einschuböffnungen 4,5 erstrecken, ausgebildet ist. Zwischen der Innenwandung 7, der Innenmanschette 8 sowie den Seitenwänden 9, 10 des Ringstegs 6 sind Aufnahmeräume 11, 12 zur Aufnahme von Rohrspitzenden der einzuschiebenden Rohre ausgebildet. Der Ringsteg 6 ist entlang einer Spiegelsymmetrieachse 13 ausgerichtet. Das Rohrverbindungsteil 1 ist im Wesentlichen zylindrisch aufgebaut und radial symmetrisch um eine Längsachse 14 aufgebaut. Die Innenmanschette 8 weist an ihren in Richtung der Einschuböffnungen 4, 5 weisenden Außenkanten Anschrägungen 15, 16 auf, die in einem Radius 17, 18 auslaufen, so dass eine abgerundete Kante der Innenmanschette 8 ausgebildet ist. Die Muffenbereiche 2, 3 weisen jeweils eine Ringsicke 19, 20 auf, in die jeweils eine Ringdichtung aufgenommen werden kann. Zwischen den Seitenwandungen 9, 10 des Ringstegs 6 sind Verstärkungselemente 21, 22 ausgebildet. Die Verstärkungselemente 21, 22 können insbesondere an die Innenfase eines Rohrspitzendes angepasst sein. Die Aufnahmeräume 11, 12 zur Aufnahme der Rohrspitzenden weisen jeweils einen ersten Bereich 23, 24 auf, in dem der Innenradius der Innenwandung 7 größer ist als in einem zweiten Bereich 25, 26. Die Breite des zweiten Bereiches 25, 26 beträgt hierbei ca. ¾ der Breite des jeweiligen Aufnahmeraums 11, 12 und dient zur Zentrierung des jeweilig aufzunehmenden Rohrspitzendes. Die Innenkanten 27, 28 der Einschuböffnungen 4, 5 sind abgerundet ausgebildet um ein einfaches Einfügen der aufzunehmenden Rohrleitungen zu gewährleisten. An der Außenseite 29 des Rohrverbindungsteils 1 sind Verstärkungsrippen 30 angeordnet, wobei die Außendurchmesser der Verstärkungsrippen und somit die Höhe der Rippen bezogen auf ihren Boden von den Einschuböffnungen 4, 5 in Richtung der Spiegelsymmetrieachse 13 hin abnehmen. Die Außenseiten 31, 32 der Ringsicken 19, 20 bilden jeweils eine Rippe 33, 34. Der den Muffenhals 51, 52 definierende Abstand zwischen einer Einschuböffnung 4, 5 und einer Ringsicke 19, 20 beträgt ca. ⅓ des Nenndurchmessers der zu verbindenden Rohre.

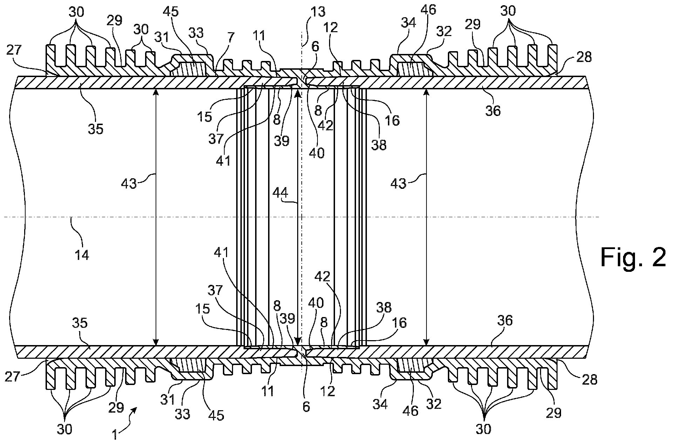

In Fig. 2 ist ein Rohrverbindungsteil 1 gemäß Fig. 1 mit eingefügten Rohren 35, 36 dargestellt. Gleiche Bauteile sind mit gleichen Bezugszeichen versehen. Die Rohre 35, 36 sind in die Aufnahmeräume 11, 12 aufgenommen. Die Rohrspitzenden 37, 38 weisen jeweils eine Innenfase 39, 40 auf. Weiterhin weisen die Rohrspitzenden 37, 38 einen verjüngten Bereich 41, 42 auf, in dem ein größerer Innenradius des Rohres als der Nenndurchmesser vorliegt. Der Bereich 41, 42 ist an die Maße des Aufnahmeraums 11, 12 angepasst. Der Innendurchmesser 43 der Rohre 35, 36 entspricht dem Innendurchmesser 44 der umlaufenden Innenmanschette 8. Somit ist bei einem Einfügen der Rohrspitzenden 37, 38 in die Aufnahmeräume 11, 12 eine möglichst durchgehende Innenmantelfläche zwischen den Innenwandungen der Rohre 35, 36 und der Innenmanschette 8 gegeben. In die Ringsicken 19, 20 sind Ringdichtungen 45, 46 aufgenommen.

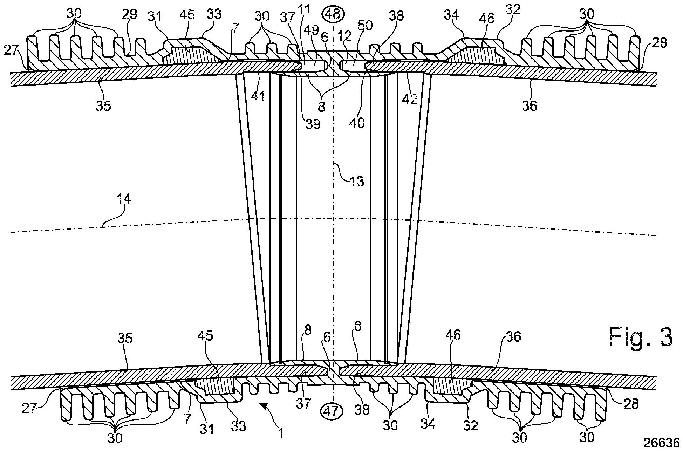

In Fig. 3 ist ein Rohrverbindungsteil 1 gemäß den Fig. 1 und 2 bei einer Kurvenverlegung der Rohre 35, 36 dargestellt. Gleiche Bauteile sind mit gleichen Bezugszeichen versehen. Durch das Legen einer Kurve mit den Rohren 35, 36 werden die Rohrspitzenden 37, 38 an der Kurveninnenseite 47 zusammengedrückt, während die Rohre 35, 36 an der Kurvenaußenseite 48 auseinander gezogen werden. Durch die abdeckende Innenmanschette 8, die an dem Ringsteg 6 angeordnet ist, werden die entstehenden Spalte 49, 50 zwischen den Rohrspitzenden 37, 38 und dem Ringsteg 6 abgedeckt. Somit entstehen keine offenen Spalte, in die sich beispielsweise Verunreinigungen oder Ähnliches absetzen können. An der Kurvenaußenseite 48 wird die Außenwandung 29 des Rohrverbindungsteils 1 gestreckt. Insbesondere werden hierbei auch die Außenseiten 31, 32 der Ringsicken 19, 20 gestreckt. Dadurch, dass die Ringsicken 19, 20 als Rippen 33, 34 ausgebildet sind, können die Außenseiten der Ringsicken 31, 32 so gestreckt werden, dass Rohrverbindungsteil 1 nicht durch die Kurvenverlegung der Rohre 35, 36 beschädigt wird. An der Kurveninnenseite 47 werden die Ringsicken 31, 32 entsprechend gestaucht, wodurch die wirkenden Kräfte aufgenommen werden können.

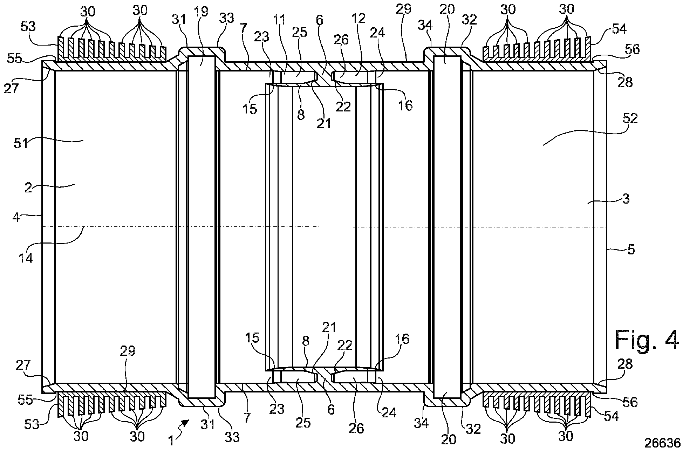

In Fig. 4 ist ein Rohrverbindungsteil 1 mit Rippen 30 aufweisenden Außenmanschetten 53, 54 dargestellt. Gleiche Bauteile sind mit gleichen Bezugszeichen versehen. Die Außenmanschetten 53, 54 weisen eine hohlzylindrische Innenwandung auf, die über die Außenbereiche der Muffenhälse 51, 52 geschoben werden. Insbesondere können die Außenmanschetten 53, 54 über die Muffenhälse 51, 52 gepresst werden. Hierzu können die Muffenhälse 51, 52 Hinterschneidungen 55, 56 aufweisen, die eine sichere Montage der Außenmanschetten 53, 54 ermöglichen. Insbesondere können die Hinterschneidungen 55, 56 so ausgebildet sein, dass ein Abrutschen der Außenmanschetten 53, 54 in Längsrichtung des Rohrverbindungsteils 1 verhindert ist. Die Außenmanschetten 53, 54 können beispielsweise aus einem metallischen Material, wie beispielsweise Aluminium, oder auch aus einem Kunststoff gefertigt sein. Bei dem Kunststoff kann es sich um den Kunststoff handeln, aus dem das Rohrverbindungsteil 1 hergestellt ist, es können aber auch andere Materialien zum Einsatz kommen.

## Patentansprüche

1. Rohrverbindungsteil (1) zum Verbinden der Spitzenden (37, 38) zweier Rohre (35, 36), wobei das Rohrverbindungsteil (1) zwei Muffenbereiche (2, 3) aufweist, wobei jeder Muffenbereich (2, 3) zur Aufnahme eines Rohrspitzendes (37, 38) ausgebildet ist und eine Einschuböffnung (4, 5) zum Einschieben der Rohrspitzenden (37, 38) aufweist, wobei zwischen den Muffenbereichen (2, 3) des Rohrverbindungsteils (1) ein entlang der Innenwandung (7) quer zu Längserstreckung des Rohrverbindungsteils (1) umlaufender Ringsteg (6) angeordnet ist, wobei der umlaufende Ringsteg (6) eine sich beidseitig in Richtung der Einschuböffnungen (4,5) erstreckende Innenmanschette (8) aufweist, wobei zwischen der Innenmanschette (8), den Seitenwandungen (9, 10) des Ringsteges (6) und Abschnitten der Innenwandung (7) des Rohrverbindungsteils (1) zu beiden Seiten des Ringsteges (6) jeweils ein umlaufender Aufnahmeraum (11, 12) zur zumindest abschnittsweisen Aufnahme der jeweiligen Rohrspitzenden (37, 38) ausgebildet ist, wobei die Muffenbereiche (2, 3) jeweils mindestens eine umlaufende Ringsicke (19, 20) zur Aufnahme mindestens einer Ringdichtung (45, 46) aufweisen, wobei die Außenseiten (31, 32) der Ringsicke (19, 20), insbesondere die Außenseite (31, 32) des Sickenbodens, zumindest abschnittsweise eine umlaufende Rippe (33, 34) an der Außenseite (29) des Rohrverbindungsteils (1) ausbilden,
**dadurch gekennzeichnet,**
**dass** die durch die Außenseiten (31, 32) der Ringsicke (19, 20) ausgebildete Rippe (33, 34) einen kleineren Außendurchmesser als die benachbarte weiter in Richtung der Einschuböffnung (4, 5) angeordneten Rippe (30) aufweist und dass die durch die Außenseiten (31, 32) der Ringsicke (19, 20) ausgebildete Rippe (33, 34) einen größeren Außendurchmesser als die benachbarte weiter in Richtung der Mitte des Rohrverbindungsteils (1) angeordneten Verstärkungsrippe (30) aufweist.

2. Rohrverbindungsteil nach Anspruch 1, **dadurch gekennzeichnet, dass** die sich beidseitig erstreckende Innenmanschette (8) entlang des Innenradius des Ringsteges (6) umlaufend angeordnet ist und dass durch die an dem Ringsteg (6) angeordnete Innenmanschette (8) beidseitig zum Ringsteg (6) jeweils eine umlaufende Hinterschneidung ausgebildet ist.

3. Rohrverbindungsteil nach einem der Ansprüche 1 oder 2, **dadurch gekennzeichnet, dass** der Innendurchmesser der Innenmanschette (8) dem Innendurchmesser (43) der zu verbindenden Rohre (35, 36) entspricht.

4. Rohrverbindungsteil nach einem der Ansprüche 1 bis 3, **dadurch gekennzeichnet, dass** die Innenmanschette (8) an den den Einschuböffnungen (4, 5) zugewandten Kanten jeweils angeschrägt ist, wobei die Anschrägung (15, 16) an der Innenwandung (7) des Rohrverbindungsteils (1) abgewandten Seite der Innenmanschette (8) ausgebildet ist und wobei die Materialstärke der Innenmanschette (8) zumindest abschnittsweise zu den Außenkanten der Innenmanschette (8) hin abnimmt.

5. Rohrverbindungsteil nach einem der Ansprüche 1 bis 4, **dadurch gekennzeichnet, dass** die Abschnitte der Innenwandung (7) des Rohrverbindungsteils (1) die die Aufnahmeräume begrenzen den Außendurchmessern der aufzunehmenden Rohrspitzenden (37, 38) entsprechen.

6. Rohrverbindungsteil nach einem der Ansprüche 1 bis 5, **dadurch gekennzeichnet, dass** der Innendurchmesser des Rohverbindungsteils (1) an den Öffnungen der Aufnahmeräume (11, 12) größer ist als in den zum Ringsteg (6) benachbarten Bereichen der Aufnahmeräume (11,12).

7. Rohrverbindungsteil nach einem der Ansprüche 1 bis 6, **dadurch gekennzeichnet, dass** das Rohrverbindungsteil (1) an seiner Außenwandung (29) außenliegende Rippen (30) aufweist, dass die Rippen (30) sich in radialer Richtung von der Außenwandung (29) des Rohrverbindungsteil (1) erstrecken und dass die Rippen (30) parallel zueinander angeordnet sind.

8. Rohrverbindungsteil nach Anspruch 7, **dadurch gekennzeichnet, dass** die Rippen (30) im Bereich der Außenwandung (29) der Einschuböffnungen (4, 5) einen größeren Außendurchmesser aufweisen als die Rippen (30) im Mittelbereich des Rohrverbindungsteils (1).

9. Rohrverbindungsteil nach einem der Ansprüche 7 oder 8, **dadurch gekennzeichnet, dass** die Außendurchmesser der parallel zueinander angeordneten Rippen (30) von den Einschuböffnungen (4, 5) in Richtung der Mitte des Rohrverbindungsteils (1) hin abnehmen.

10. Rohrverbindungsteil nach einem der Ansprüche 1 bis 9, **dadurch gekennzeichnet, dass** die Muffenbereiche (2, 3) jeweils einen Muffenhals (51, 52) aufweisen und dass die Muffenhälse (51, 52) eine Länge von in etwa ein Drittel des Durchmessers der aufzunehmenden Rohre (35, 36) aufweisen.

11. Rohrverbindungsteil nach einem der Ansprüche 1 bis 10, **dadurch gekennzeichnet, dass** die Innenmanschette (8) beidseitig vom Ringsteg (6) ausgehend eine Neigung in Richtung der nächstgelegenen Innenwandung (7) des Rohrverbindungsteils (1) aufweist.

12. Rohrverbindungsteil nach einem der Ansprüche 1 bis 11, **dadurch gekennzeichnet, dass** die Ringsicke (19, 20) zumindest abschnittsweise flexibel ausgebildet ist.

## Claims

1. Pipe connection part (1) for connecting the spigot ends (37, 38) of two pipes (35, 36), wherein the pipe connection part (1) has two socket regions (2, 3), wherein each socket region (2, 3) is designed to accommodate one pipe spigot end (37, 38) and has an insertion opening (4, 5) for inserting the pipe spigot ends (37, 38), wherein a circumferential annular web (6) is arranged along the inner wall (7) and transverse to the longitudinal extension of the pipe connection part (1) between the socket regions (2, 3) of the pipe connection part (1), wherein the circumferential annular web (6) has an inner collar (8) extending on both sides in the direction of the insertion openings (4, 5), wherein a circumferential accommodation space (11, 12) is respectively designed on both sides of the annular web (6) between the inner collar (8), the side walls (9, 10) of the annular web (6), and sections of the inner wall (7) of the pipe connection part (1) for at least sectional accommodation of the respective pipe spigot end (37, 38), wherein the socket regions (2, 3) respectively have at least one circumferential annular bead (19, 20) for receiving at least one annular seal (45, 46), wherein the outer sides (31, 32) of the annular beads (19, 20), in particular the outer side (31, 32) of the bead base, form, at least in sections, a circumferential rib (33, 34) on the outer side (29) of the pipe connection part (1),
**characterized in that**
the ribs (33, 34), formed by the outer sides (31, 32) of the annular beads (19, 20), have a smaller outer diameter than the adjacent rib (30) arranged further in the direction of the insertion opening (4, 5), and that the ribs (33, 34), formed by the outer sides (31, 32) of the annular beads (19, 20), have a larger outer diameter than the adjacent reinforcing rib (30) arranged further in the direction toward the middle of the pipe connection part (1).

2. Pipe connection part according to claim 1, **characterized in that** the inner collar (8), which extends on both sides, is circumferentially arranged along the inner radius of the annular web (6), and that a circumferential undercut is respectively formed on both sides with respect to the annular web (6) by the inner collar (8) arranged on the annular web (6).

3. Pipe connection part according to claim 1 or 2, **characterized in that** the inner diameter of the inner collar (8) corresponds to the inner diameter (43) of the pipes (35, 36) to be connected.

4. Pipe connection part according to one of claims 1 to 3, **characterized in that** the inner collar (8) is beveled at the respective edges facing the insertion openings (4, 5), wherein the bevel (15, 16) is formed on the side of the inner collar (8) facing away from the inner wall (7) of the pipe connection part (1), and wherein the material thickness of the inner collar (8) decreases, at least in sections, towards the outer edges of the inner collar (8).

5. Pipe connection part according to one of claims 1 to 4, **characterized in that** the sections of the inner wall (7) of the pipe connection part (1), which delimit the receiving spaces, correspond to the outer diameters of the pipe spigot ends (37, 38) to be accommodated.

6. Pipe connection part according to one of claims 1 to 5, **characterized in that** the inner diameter of the pipe connection part (1) is greater at the openings of the receiving spaces (11, 12) than in the areas of the receiving spaces (11, 12) adjacent to the annular web (6).

7. Pipe connection part according to one of claims 1 to 6, **characterized in that** the pipe connection part (1) has external ribs (30) on its outer wall (29), that the ribs (30) extend in the radial direction from the outer wall (29) of the pipe connection part (1), and that the ribs (30) are arranged parallel to one another.

8. Pipe connection part according to claim 7, **characterized in that** the ribs (30) in the area of the outer wall (29) of the insertion openings (4, 5) have a greater outer diameter than the ribs (30) in the middle area of the pipe connection part (1).

9. Pipe connection part according to one of claims 7 or 8, **characterized in that** the outer diameter of the ribs (30) arranged parallel to one another decreases from the insertion openings (4, 5) in the direction toward the middle of the pipe connection part (1).

10. Pipe connection part according to one of claims 1 to 9, **characterized in that** the socket regions (2, 3) respectively have a socket neck (51, 52), and that the socket necks (51, 52) have a length of approximately one-third of the diameter of the pipes (35, 36) to be accommodated.

11. Pipe connection part according to one of claims 1 to 10, **characterized in that** the inner collar (8) has on both sides, starting from the annular web (6), an inclination in the direction of the closest inner wall (7) of the pipe connection part (1).

12. Pipe connection part according to one of claims 1 to 11, **characterized in that** the annular bead (19, 20) is designed to be flexible at least in sections.

## Revendications

1. Raccord de tuyaux (1) pour raccorder les extrémités (37, 38) de deux tuyaux (35, 36), sachant que le raccord de tuyaux (1) comporte deux zones de manchon (2, 3), sachant que chaque zone de manchon (2, 3) est constituée pour loger une extrémité de tuyau (37, 38) et comporte une ouverture d'introduction (4, 5) pour introduire les extrémité de tuyau (37, 38), sachant qu'entre les zones de manchon (2, 3) du raccord de tuyaux (1) est disposée une moulure annulaire (6) passant périphériquement le long de la paroi intérieure (7) transversalement à l'extension longitudinale du raccord de tuyaux (1), sachant que la moulure annulaire périphérique (6) comporte un manchon intérieur (8) s'étendant des deux côtés en direction des ouvertures d'introduction (4, 5), sachant qu'entre le manchon intérieur (8), les parois latérales (9, 10) de la moulure annulaire (6) et les sections de la paroi intérieure (7) du raccord de tuyaux (1) est respectivement constitué aux deux côtés de la moulure annulaire (6) un espace de logement périphérique (11, 12) pour loger au moins par endroits les extrémités de tuyau respectives (37, 38), sachant que les zones de manchon (2, 3) comportent respectivement au moins un collet annulaire périphérique (19, 20) pour loger au moins un joint d'étanchéité annulaire (45, 46), sachant que les côtés extérieurs (31, 32) du collet annulaire (19, 20), en particulier le côté extérieur (31, 32) du fond de collet, constituent au moins par endroits une nervure périphérique (33, 34) sur le côté extérieur (29) du raccord de tuyaux (1),
**caractérisé en ce que**
la nervure (33, 34) constitué par les côtés extérieurs (31, 32) du collet annulaire (19, 20) comporte un diamètre extérieur plus petit que la nervure (30) voisine disposée plus loin en direction de l'ouverture d'introduction (4, 5) et **en ce que** la nervure (33, 34) constituée par les côtés extérieurs (31, 32) du collet annulaire (19, 20) comporte un diamètre extérieur plus grand que la nervure de renfort (30) voisine disposée plus loin en direction du centre du raccord de tuyaux (1).

2. Raccord de tuyaux selon la revendication 1, **caractérisé en ce que** le manchon intérieur (8) s'étendant des deux côtés est disposé en périphérie le long du rayon intérieur de la moulure annulaire (6) et **en ce qu'**à chaque fois une contredépouille périphérique est constituée des deux côtés de la moulure annulaire (6) par le manchon intérieur (8) disposé sur la moulure annulaire (6).

3. Raccord de tuyaux selon l'une quelconque des revendications 1 ou 2, **caractérisé en ce que** le diamètre intérieur du manchon intérieur (8) correspond au diamètre intérieur (43) des tuyaux à raccorder (35, 36).

4. Raccord de tuyaux selon l'une quelconque des revendications 1 à 3, **caractérisé en ce que** le manchon intérieur (8) est à chaque fois chanfreiné sur les bords tournés vers les ouvertures d'introduction (4, 5), sachant que le chanfreinage (15, 16) est constitué sur le côté du manchon intérieur (8) éloigné de la paroi intérieure (7) du raccord de tuyaux (1) et sachant que l'épaisseur de matériau du manchon intérieur (8) diminue au moins par endroits vers les bords extérieurs du manchon intérieur (8).

5. Raccord de tuyaux selon l'une quelconque des revendications 1 à 4, **caractérisé en ce que** les sections de la paroi intérieure (7) du raccord de tuyaux (1), qui limitent les espaces de logement correspondent aux diamètres extérieurs des extrémités de tuyau à loger (37, 38).

6. Raccord de tuyaux selon l'une quelconque des revendications 1 à 5, **caractérisé en ce que** le diamètre intérieur du raccord de tuyaux (1) sur les ouvertures des espaces de logement (11, 12) est plus grand que dans les zones voisines de la moulure annulaire (6) des espaces de logement (11, 12).

7. Raccord de tuyaux selon l'une quelconque des revendications 1 à 6, **caractérisé en ce que** le raccord de tuyaux (1) comporte sur sa paroi extérieure (29) des nervures externes (30), **en ce que** les nervures (30) s'étendent en direction radiale depuis la paroi extérieure (29) du raccord de tuyaux (1) et **en ce que** les nervures (30) sont disposées parallèlement les unes aux autres.

8. Raccord de tuyaux selon la revendication 7, **caractérisé en ce que** les nervures (30) comportent dans la zone de la paroi extérieure (29) des ouvertures d'introduction (4, 5), un diamètre extérieur plus grand que les nervures (30) dans la zone centrale du raccord de tuyaux (1).

9. Raccord de tuyaux selon l'une quelconque des revendications 7 ou 8, **caractérisé en ce que** les diamètres extérieurs des nervures (30) disposées parallèlement les unes aux autres diminuent des ouvertures d'introduction (4, 5) en direction du centre du raccord de tuyaux (1).

10. Raccord de tuyaux selon l'une quelconque des revendications 1 à 9, **caractérisé en ce que** les zones de manchon (2, 3) comportent respectivement un col de manchon (51, 52) et **en ce que** les cols de manchon (51, 52) comportent une longueur se situant dans à peu près un tiers du diamètre des tuyaux à recevoir (35, 36).

11. Raccord de tuyaux selon l'une quelconque des revendications 1 à 10, **caractérisé en ce que** le manchon intérieur (8) comporte des deux côtés en partant de la moulure annulaire (6) une inclinaison en direction de la paroi intérieure (7) la plus proche du raccord de tuyaux (1).

12. Raccord de tuyaux selon l'une quelconque des revendications 1 à 11, **caractérisé en ce que** le collet annulaire (19, 20) est constitué au moins par endroits de façon flexible.
